# EUROPÄISCHE PATENTSCHRIFT

(11) **EP 2 179 192 B1**
(45) Veröffentlichungstag und Bekanntmachung des Hinweises auf die Patenterteilung: **27.02.2013**
(21) Anmeldenummer: 08786918.6
(22) Anmeldetag: 06.08.2008
(51) Int. Cl.: F16D 13/58, F16D 13/71

(54) **REIBUNGSKUPPLUNG, INSBESONDERE FÜR DEN ANTRIEBSSTRANG EINES FAHRZEUGS**
FRICTION CLUTCH, IN PARTICULAR FOR THE DRIVETRAIN OF A VEHICLE
EMBRAYAGE À FRICTION, EN PARTICULIER POUR LA CHAÎNE CINÉMATIQUE D'UN VÉHICULE

(30) Priorität: 20.08.2007 DE 102007039223; 28.07.2008 DE 102008040759
(43) Veröffentlichungstag der Anmeldung: 28.04.2010
(73) Patentinhaber: ZF Friedrichshafen AG, 88038 Friedrichshafen (DE)
(72) Erfinder: WEIDINGER, Reinhold, 97509 Kolitzheim (DE); LINDNER, Joachim, 97456 Dittelbrunn-Hambach (DE)
(86) Internationale Anmeldenummer: PCT/EP2008/060310
(87) Internationale Veröffentlichungsnummer: WO 2009/024464

(56) Entgegenhaltungen:
- DE-A1- 19 513 454
- FR-A- 2 381 938
- FR-A- 2 756 892
- GB-A- 2 142 100

## Beschreibung

### Technisches Gebiet

Die vorliegende Erfindung betrifft eine Reibungskupplung, insbesondere für den Antriebsstrang eines Fahrzeugs, umfassend eine mit einem Antriebsorgan zur gemeinsamen Drehung um eine Drehachse zu koppelnde Schwungmasse mit einem eine erste Reibfläche bereitstellenden Bodenbereich und einem radial außen vom Bodenbereich im Wesentlichen axial sich erstreckenden Wandungsbereich und ein im Wesentlichen scheibenartiges Gehäuse, welches in seinem radial äußeren Bereich bezüglich einer Stirnseite des Wandungsbereichs abgestützt ist und daran festgelegt ist.

### Stand der Technik

Eine derartige Reibungskupplung ist aus der DE 195 13 454 A1 bekannt. Diese bekannte Reibungskupplung ist grundsätzlich von dem gedrückten Typ. Der in seinem radial mittleren Bereich an dem scheibenartigen Gehäuse axial abgestützte Kraftspeicher beaufschlagt in seinem radial äußeren Bereich eine Anpressplatte, die mit durch den Kraftspeicher zu beaufschlagenden Schneidenbereichen entsprechende Aussparungen in dem scheibenartigen Gehäuse durchgreift. Weiterhin sind aus der GB2 142 100A, der FR 2 756 892 A und der FR 2 381 938 A Reibungskupplungen bekannt, welche eine mit einem Antriebsorgan zur gemeinsamen Drehung um eine Drehachse zu koppelnde Schwungmasse mit einem eine erste Reibfläche bereitstellenden Bodenbereich und einem radial außen vom Bodenbereich im Wesentlichen axial sich erstreckenden Wandungsbereich, ein im Wesentlichen scheibenartiges Gehäuse, welches in seinem radial äußeren Bereich bezüglich einer Stirnseite des Wandungsbereichs abgestützt ist und daran festgelegt ist, eine Anpressplatte, welche eine zweite Reibfläche bereitstellt und vermittels einer Mehrzahl von Kopplungseinheiten mit dem scheibenartigen Gehäuse zur gemeinsamen Drehung um die Drehachse und bezüglich des scheibenartigen Gehäuses axial bewegbar gekoppelt ist, umfassen. Hierbei weisen die Reibungskupplungen weiterhin eine Kraftbeaufschlagungsanordnung auf, welche bezüglich des scheibenartigen Gehäuses und der Anpressplatte abgestützt ist zur Beaufschlagung der Anpressplatte in Richtung auf den Bodenbereich der Schwungmasse zu, wobei die Kopplungseinheiten bezüglich des scheibenartigen Gehäuses in einem axialen Bereich festgelegt sind, welcher sich axial im Wesentlichen nicht mit dem radial äußeren Bereich der Kraftbeaufschlagungsanordnung überlappt.

### Darstellung der Erfindung

Es ist die Zielsetzung der vorliegenden Erfindung, eine Reibungskupplung so auszugestalten, dass bei kompakter radialer Baugröße der für den Kraftspeicher verfügbare Bauraum möglichst groß ist.

Erfindungsgemäß wird diese Aufgabe gelöst durch eine Reibungskupplung, insbesondere für den Antriebsstrang eines Fahrzeugs, gemäß den Merkmalen des Anspruchs 1.

Bei der erfindungsgemäßen Reibungskupplung ist die Kraftbeaufschlagungsanordnung also in demjenigen Raumbereich angeordnet, welcher von der Schwungmasse und dem daran festgelegten Gehäuse umgeben ist, so dass der axiale Bauraum begrenzt werden kann. Gleichzeitig wird eine ungewünschte Wechselwirkung zwischen dem radial äußeren Bereich der Kraftbeaufschlagungsanordnung und den zur Ankopplung der Anpressplatte dienenden Kopplungseinheiten vermieden.

Erfindungsgemäß ist vorgesehen, dass an dem radial äußeren Bereich des scheibenartigen Gehäuses Anlageflächenbereiche für die Kopplungseinheiten ausgebildet sind, wobei die Anlageflächenbereiche bezüglich des radial äußeren Bereichs der Kraftbeaufschlagungsanordnung axial versetzt liegen.

Erfindungsgemäß ist weiterhin vorgesehen, dass die Kopplungsbereiche bezüglich des scheibenartigen Gehäuses über Abstandselemente abgestützt sind, welche Anlageflächenbereiche für die Kopplungseinheiten bereitstellen.

Eine Funktionenverschmelzung mit der Folge eines vereinfachten Aufbaus wird erfindungsgemäß dadurch erreicht, dass im Bereich der Anbindung der Kopplungseinheiten an das scheibenartige Gehäuse eine Zentrierformation für die Kraftbeaufschlagungsanordnung gebildet ist. Die Abstützelemente bilden hierbei die Zentrierformation.

Um den erforderlichen Bauraum möglichst effizient zu nutzen, wird vorgeschlagen, dass die Anlageflächenbereiche bezüglich des radial äußeren Bereichs der Kraftbeaufschlagungsanordnung an einer von der Stirnseite abgewandten Seite liegen. Dabei können die Anlageflächenbereiche entweder an einer der Stirnseite zugewandten Seite oder einer von der Stirnseite abgewandten Seite des scheibenförmigen Gehäuses liegen.

Wenn bei einer bevorzugten Ausführungsform die Anlageflächenbereiche bezüglich des radial äußeren Bereichs der Kraftbeaufschlagungsanordnung an einer der Stirnseite zugewandten Seite liegen, wird auf Grund der Tatsache, dass ein axiales Übergreifen der Kraftbeaufschlagungsanordnung vermittels der Kopplungseinheiten nicht erforderlich ist, ein gegenseitiges Stören im Wesentlichen vollständig ausgeschlossen.

Die Kopplungseinheiten können wenigstens eine Blattfeder umfassen, also nach Art so genannter Tangentialblattfedern ausgebildet sein. Weiter kann die Kraftbeaufschlagungsanordnung eine Membranfeder umfassen.

Die Kraftbeaufschlagungsanordnung kann in einem radial äußeren Bereich bezüglich des scheibenartigen Gehäuses und radial weiter innen bezüglich der Anpressplatte abgestützt sein. Dies bedeutet, dass die Kupplung insbesondere dann, wenn die Kraftbeaufschlagungsanordnung als so genannte Membranfeder ausgebildet ist, von dem so genannten gezogenen Typ ist. Gleichwohl sei darauf hingewiesen, dass die Prinzipien der vorliegenden Erfindung auch Anwendung finden können bei Kupplungen des so genannten gedrückten Typs, also dann, wenn ein Kraftspeicher, wie z.B. eine Membranfeder, in einem radial mittleren Bereich bezüglich des Gehäuses und radial weiter außen bezüglich der Anpressplatte abgestützt ist.

Eine weitere Einsparung von radialem Bauraum kann dadurch erlangt werden, dass im Wandungsbereich Aussparungen für die Kopplungseinheiten ausgebildet sind.

Das scheibenartige Gehäuse kann an der Schwungmasse durch eine Mehrzahl von in diese eingreifende Befestigungsbolzen festgelegt sein.

Weiterhin kann vorgesehen sein, dass die Anlageflächenbereiche an einer von der Stirnseite abgewandten Seite des scheibenartigen Gehäuses liegen. Auf diese Art und Weise wird eine definierte Zentrierung des Gehäuses bezüglich der Schwungmasse erhalten.

Um auch dabei den radialen Bauraum möglichst klein zu halten, wird vorgeschlagen, dass der Wandungsbereich im Bereich seines axialen Endes einen radialen Rücksprung zur Aufnahme der Zentrierabschnitte aufweist.

Der Wandungsbereich kann dort, wo Befestigungsbolzen vorgesehen sind, axial offene Aussparungen aufweisen. Die bedeutet, dass die Befestigungsbolzen zunächst durch diese Aussparungen hindurchlaufen und erst in größerem Abstand vom scheibenartigen Gehäuse in den Wandungsbereich oder den Bodenbereich der Schwungmasse eingreifen. Dies ist insbesondere dann vorteilhaft, wenn ein vorangehend beschriebener radialer Rücksprung im Wandungsbereich gebildet ist, da in diesem Bereich im Allgemeinen eine deutlich reduzierte Materialstärke vorhanden sein wird und somit die Gefahr des Ausbrechens bestehen würde. Es ist daher vorteilhaft, wenn diese Aussparungen denjenigen axialen Bereich überdecken, in welchem auch der radiale Rücksprung vorhanden ist.

Bei einer weiteren vorteilhaften Ausgestaltung kann vorgesehen sein, dass an der von der Stirnseite abgewandten Seite des scheibenartigen Gehäuses dort, wo Befestigungsbolzen vorgesehen sind, eine größere Materialhärte für die Beaufschlagung durch die Befestigungsbolzen bereitgestellt ist, als in anderen Bereichen des scheibenartigen Gehäuses. Es kann somit vermieden werden, dass das im Allgemeinen aus vergleichsweise weichem und somit leicht verformbarem Blechmaterial aufgebaute Gehäuse durch die Beaufschlagung mit den Befestigungsbolzen verformt wird.

Dazu kann beispielsweise vorgesehen sein, dass das scheibenartige Gehäuse dort, wo die Befestigungsbolzen dieses beaufschlagen, mit größerer Materialhärte ausgebildet ist, als in anderen Bereichen.

Bei einer alternativen Ausgestaltung kann vorgesehen sein, dass in Zuordnung zu den Befestigungsbolzen Unterlegeelemente vorgesehen sind, die bezüglich des Materials des Gehäuses eine größere Materialhärte aufweisen.

Um den Vorgang des Zusammenfügens eines derartigen Gehäuses mit daran vorgesehenen oder vorzusehenden Komponenten an der Schwungmasse zu erleichtern, wird weiter vorgeschlagen, dass die Unterlegeelemente an dem Gehäuse durch Befestigungselemente festgelegt sind, vermittels welchen die Kopplungseinheiten bezüglich des Gehäuses festgelegt sind.

### Kurze Beschreibung der Zeichnungen

Die vorliegende Erfindung wird nachfolgend mit Bezug auf die beiliegenden Figuren detailliert beschrieben. Es zeigt:
- Fig. 1: eine Teil-Axialansicht einer Reibungskupplung;
- Fig. 2: eine Schnittansicht der Reibungskupplung der Fig. 1, geschnitten längs einer Linie II - II in Fig. 1;
- Fig. 3: eine Schnittansicht der Reibungskupplung der Fig. 1, geschnitten längs einer Linie I - III in Fig. 1;
- Fig. 4: eine Schnittansicht der Reibungskupplung der Fig. 1, geschnitten längs einer Linie IV - IV in Fig. 1;
- Fig. 5: eine Schnittansicht der Reibungskupplung der Fig. 1, geschnitten längs einer Linie V - V in Fig. 1;
- Fig. 6: eine Ansicht der Reibungskupplung der Fig. 1 in Blickrichtung VI in Fig. 1;
- Fig. 7: eine weitere Teil-Axialansicht einer Reibungskupplung;
- Fig. 8: eine Schnittansicht der in Fig. 7 dargestellten Reibungskupplung, geschnitten längs einer Linie VIII - VIII in Fig. 7;
- Fig. 9: eine Schnittansicht der in Fig. 7 dargestellten Reibungskupplung, geschnitten längs einer Linie IX - IX in Fig. 7;
- Fig. 10: eine Schnittansicht der in Fig. 7 dargestellten Reibungskupplung, geschnitten längs einer Linie X - X in Fig. 7;
- Fig. 11: eine Schnittansicht der in Fig. 7 dargestellten Reibungskupplung, geschnitten längs einer Linie XI - XI in Fig. 7.

### Bester Weg zur Ausführung der Erfindung

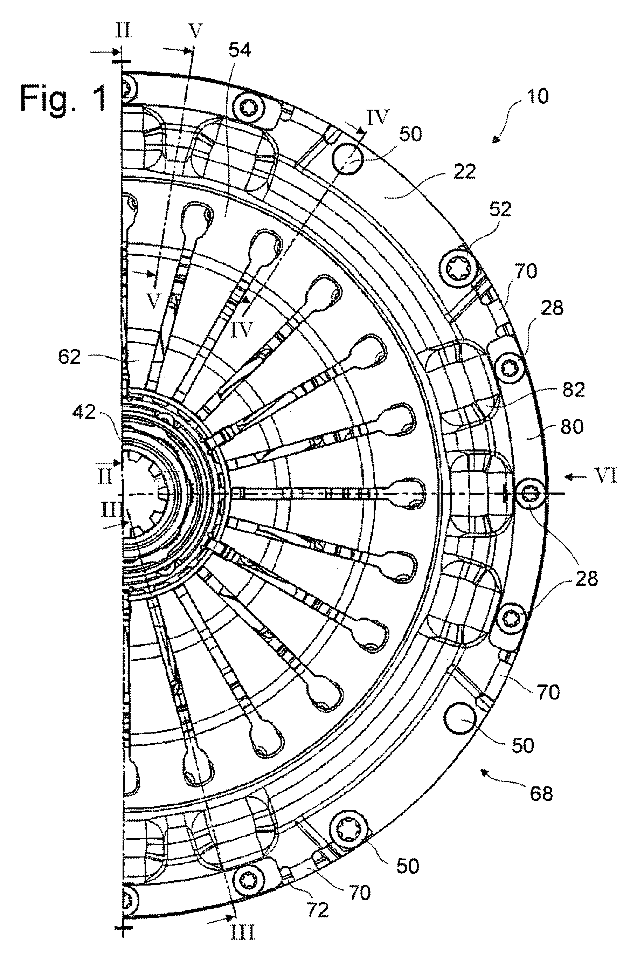

Die Fig. 1 bis 6 zeigen eine nicht erfindungsgemäße Ausgestaltungsform einer Reibungskupplung 10, mit welcher im Antriebsstrang eines Kraftfahrzeugs ein Drehmoment von einem Antriebsorgan, also beispielsweise einer Kurbelwelle einer Brennkraftmaschine, in einen Antriebsstrang weitergeleitet werden kann, beispielsweise auf die Eingangswelle eines Getriebes übertragen werden kann. Die Reibungskupplung 10 umfasst ein im Wesentlichen mit topfartiger Gestalt ausgebildetes und als Schwungmasse wirksames Schwungrad 12. Dieses Schwungrad 12 umfasst einen im Wesentlichen scheibenartigen Bodenbereich 14, der radial innen durch eine

Mehrzahl von Schraubbolzen 16 an ein um eine Drehachse A drehbares Antriebsorgan, also beispielsweise eine Kurbelwelle, angeschraubt werden kann. In seinem radial äußeren Bereich trägt der Bodenbereich 14 einen Anlasserzahnkranz 18. Ferner geht dort ein integral mit dem Bodenbereich ausgebildeter Wandungsbereich 20 vom Bodenbereich 14 ab. Das Schwungrad 12 kann beispielsweise in einem Gussverfahren aus Metall hergestellt werden.

Die Reibungskupplung 10 umfasst ferner ein hier im Wesentlichen scheibenartig ausgebildetes Gehäuse 22. In seinem radial äußeren Bereich 24 liegt dieses Gehäuse 22 an einer Stirnseite 26 des Wandungsbereichs 20 an und ist, wie im Folgenden dargelegt, durch eine Mehrzahl von Befestigungsbolzen, beispielsweise Schraubbolzen 28, am Schwungrad 12 festgelegt.

In dem von dem Schwungrad 12 und dem Gehäuse 22 umschlossenen Raumbereich ist eine Anpressplatte 30 angeordnet. Die Anpressplatte 30 liegt mit einer Reibfläche 32 einer Reibfläche 34 des Schwungrads 12 axial gegenüber. Zwischen diesen beiden Reibflächen 32 und 34 sind die Reibbeläge 36 einer allgemein mit 38 bezeichneten Kupplungsscheibe klemmbar. Diese Reibbeläge 36 sind über einen Torsionsschwingungsdämpfer 40 mit einem Nabenbereich 42 der Kupplungsscheibe 38 gekoppelt. Dieser Nabenbereich 42 kann mit einer Getriebeeingangswelle zur gemeinsamen Drehung gekoppelt werden.

Ein als Kraftbeaufschlagungsanordnung wirksamer Kraftspeicher 54 ist in seinem radial äußeren Endbereich 56 über einen Drahtring 58 oder dergleichen am Gehäuse 22 abgestützt und beaufschlagt weiter radial innen in einem oder mehreren Schneidenbereichen 60 die Anpressplatte 30. Radial innen kann an dem beispielsweise als Membranfeder mit im Allgemeinen ebener Struktur ausgebildeten Kraftspeicher 54 im Bereich von Federzungen 62 desselben ein Ausrückermechanismus 64 ziehend angreifen, um durch Ziehen der Federzungen 62 in Richtung von dem Schwungrad 14 weg die durch den Kraftspeicher 54 auf die Anpressplatte 43 ausgeübte Belastung zu mindern oder aufzuheben. Die in den Fig. gezeigte Kupplung ist also grundsätzlich von dem gezogenen Typ.

Die Anpressplatte 30 ist im Bereich nach radial außen vorstehender Kopplungsvorsprünge 44, die vorzugsweise mit gleichem Umfangsabstand um die Drehachse A herum verteilt angeordnet sind, über mehrere Kopplungseinheiten 46 mit dem Gehäuse 22 ebenfalls in dessen radial äußerem Bereich 24 fest verbunden. Die Kopplungseinheiten 46 umfassen beispielsweise jeweils zwei gestapelt angeordnete und näherungsweise in Umfangsrichtung sich erstreckende Blattfedern 48, die in einem ihrer Umfangsendbereiche beispielsweise über einen Nietbolzen 50 am radial äußeren Bereich 24 des Gehäuses 22 festgelegt sind. In ihrem anderen Endbereich sind die Kopplungseinheiten 46 bzw. Blattfedern 48 jeweils durch einen in der Fig. 1 erkennbaren Schraubbolzen 52 an einem zugeordneten der Kopplungsvorsprünge 44 festgelegt.

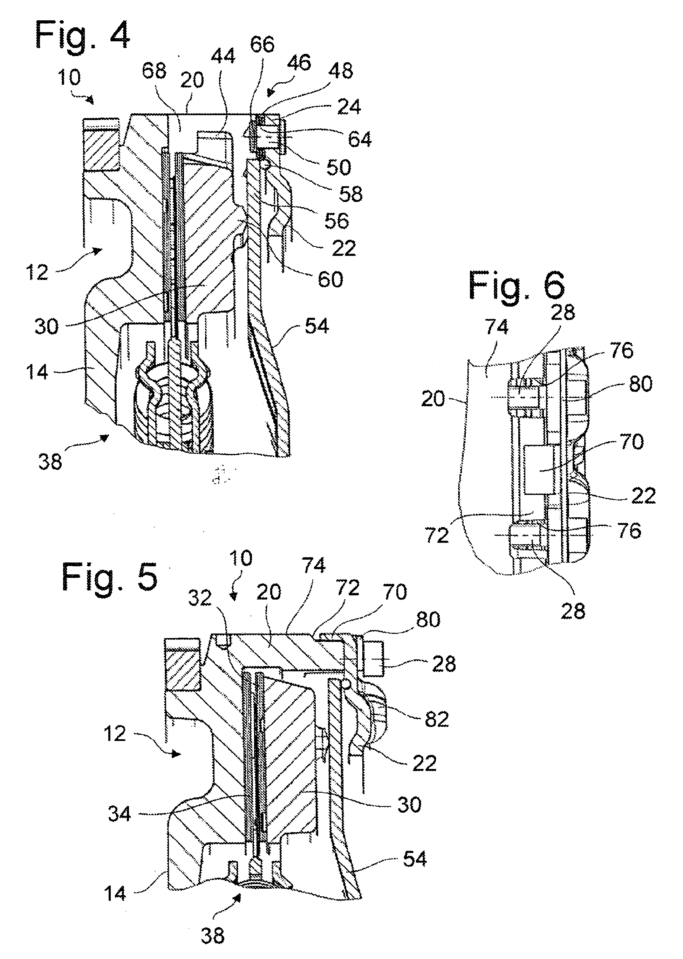

In seinem radial äußeren, also radial außerhalb des radial äußeren Bereichs 56 des Kraftspeichers 54 liegenden Bereich 24 stellt das Gehäuse 22 in Zuordnung zu den Kopplungseinheiten 46 jeweils Anlageflächenbereiche 64 bereit, in welchen die Kopplungseinheiten 46 über die Nietbolzen 50 an dem Gehäuse 22 festgelegt sind und an diesem festliegen. Wie man insbesondere in Fig. 4 erkennt, sind diese Anlageflächenbereiche 64 bezüglich des radial äußeren Bereichs 56 des Kraftspeichers 54 so angeordnet, dass keine axiale Überdeckung besteht. Insbesondere die beiden Blattfedern 48 einer jeweiligen Kopplungseinheit 46 sich im Wesentlichen nicht axial überlappen mit dem radial äußeren Bereich 56 des Kraftspeichers 54. Zusammen mit den Endbereichen der Blattfedern 48 ist durch einen jeweiligen Nietbolzen 50 eine Einlegescheibe 66 festgelegt, die sich jedoch mit dem radial äußeren Bereich 56 des Kraftspeichers 54 axial überlappt. Die Gesamtheit der über den Umfang verteilt liegenden Einlegescheiben 66 bildet eine Zentrierformation für den Kraftspeicher 54, so dass dieser in der Reibungskupplung 10 bzw. bezüglich des Gehäuses 22 und auch der Anpressplatte 30 zentriert gehalten ist. Hier kann ein geringfügiger Abstand zwischen den Einlegescheiben 66 und dem radial äußeren Bereich 56 des Kraftspeichers 54 bestehen, so dass grundsätzlich hier kein Reibungskontakt bestehen muss.

Die Kopplungseinheiten 46 bzw. die Blattfedern 48 derselben können in Umfangsrichtung gekrümmt verlaufen, also dem Außenumfang des Kraftspeichers 54 folgen und diesen somit auch zur Kopplung mit der Anpressplatte 30 axial übergreifen. In demjenigen Bereich, in welchem die Kopplungseinheiten 46 bzw. auch die Kopplungsvorsprünge 44 der Anpressplatte 30 liegen, weist der Wandungsbereich 20 Aussparungen 68 auf, die zum axial freien Ende des Wandungsbereichs 20 auch offen sind.

Durch die vorangehend beschriebene Ausgestaltung der Reibungskupplung 10 wird es möglich, die Kopplungseinheiten 46 weit nach radial außen zu verlagern, so dass sie sich im Wesentlichen auch im radialen Erstreckungsbereich des Wandungsbereichs 20 erstrecken. Dementsprechend kann auch der Kraftspeicher 54 radial sehr groß gebaut werden. Ein gegenseitiges Stören mit den Kopplungseinheiten 46 kann gleichwohl vermieden werden. Dieser Effekt kann dadurch noch stärker hervorgebracht werden, dass die Anlageflächenbereiche 64 an dem beispielsweise aus Blechmaterial aufgebauten und durch Prägung und Tiefziehen in die gewünschte Form gebrachten Gehäuse 22 nicht an der der Stirnseite 26 zugewandten Seite des Gehäuses 22 vorgesehen sind, sondern an der davon abgewandten Seite, also an der Außenseite des Gehäuses 22.

Wie man insbesondere in den Fig. 5 und 6 erkennt, weist das grundsätzlich flach, also im Wesentlichen scheibenartig ausgebildete Gehäuse 22 an mehreren Umfangspositionen axial abgebogene und den Wandungsbereich 20 des Schwungrads 12 radial außen in axialer Richtung übergreifende Zentrierabschnitte 70 auf. In Zuordnung zu diesen Zentrierabschnitten 70 ist der Wandungsbereich 20 radial außen mit einem Rücksprung 72 ausgebildet, welcher beispielsweise in radialer Richtung so tief ist, dass die Zentrierabschnitte 70 in radialer Richtung vollständig in diesem Rücksprung 72 aufgenommen werden können, also nicht über die ansonsten vorhandene Außenumfangsfläche 74 des Wandungsbereichs 20 hervorstehen. Dies ist daher von Bedeutung, da derartige Reibungskupplungen 10 allgemein in radial äußerst begrenzten Bauräumen unterzubringen sind und somit ein über die Außenumfangsfläche 74 hervorstehender Bereich des Gehäuses 22 vermieden werden kann.

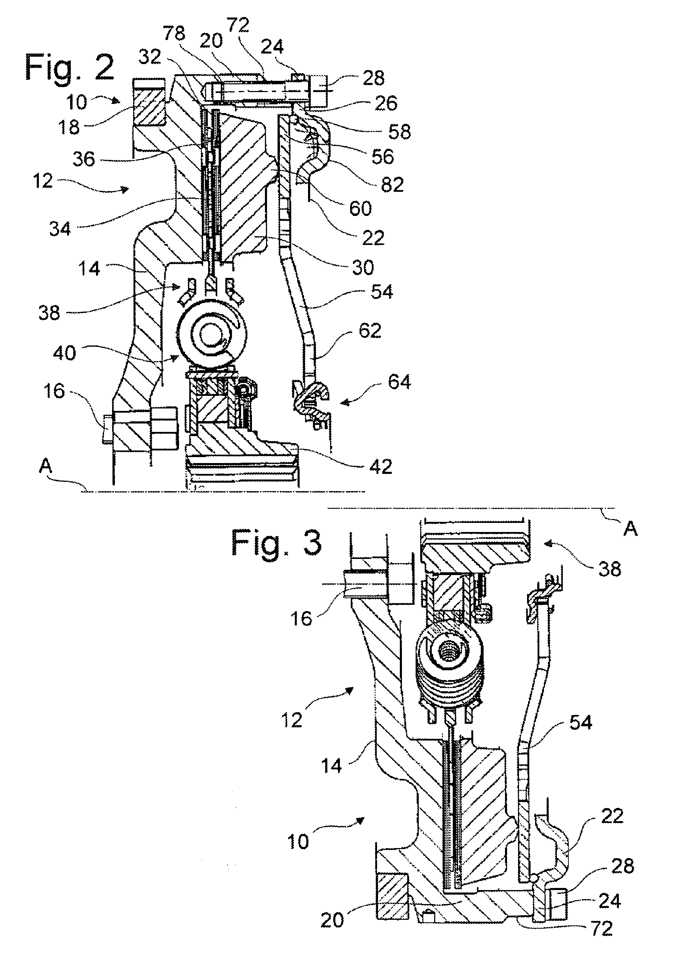

Ferner erkennt man beispielsweise in den Fig. 2 und 6, dass dort, wo die Schraubbolzen 28 das Gehäuse 22 am Schwungrad 12 festlegen, der Wandungsbereich 22 mit axial offenen Aussparungen 76 ausgebildet ist. Diese erstrecken sich in demjenigen axialen Bereich des Wandungsbereichs 22, in welchem auch der Rücksprung 72 gebildet ist. In diesem Bereich verlaufen dann die Schraubbolzen 28 außerhalb des Materials des Schwungrads 12. Erst in dem dann axial folgenden Bereich sind im Wandungsbereich 20 bzw. im Bodenbereich 14 Gewindebohrungen 78 gebildet, in welche die Schraubbolzen 28 eingeschraubt sind. Der Grund für das Vorsehen dieser Aussparungen 76 liegt darin, dass, wie die Fig. 2 dies deutlich zeigt, dort wo der Rücksprung 72 gebildet ist, der Wandungsbereich 20 mit deutlich verminderter Materialstärke gebildet ist und beim Einbringen von Gewindebohrungen bzw. Schraubbolzen die Gefahr des Ausbrechens besteht.

In der Fig. 1 erkennt man, dass die Schraubbolzen 28, durch welche das Gehäuse 22 am Schwungrad 12 festgelegt ist, jeweils in Dreiergruppen in Umfangsrichtung näher beieinander liegend vorgesehen sind, wobei beispielsweise vier derartige Dreiergruppen gleichmäßig über den Umfang verteilt vorgesehen sein können. Auf diese Art und Weise wird jeweils zwischen zwei derartigen Dreiergruppen ausreichend Umfangsraum erhalten, in welchem dann jeweils eine Kopplungseinheit 46 vorgesehen sein kann. In Zuordnung zu jeder dieser Gruppen von Schraubbolzen 28 ist ein Unterlegeelement 80 vorgesehen. Dieses ist der Außenumfangskontur des radial äußeren Bereichs 24 des Gehäuses 22 angepasst gekrümmt ausgebildet und liegt zwischen den Köpfen der Schraubbolzen 28 und dem radial äußeren Bereich 24 des Gehäuses 22. D.h., die Köpfe der Schraubbolzen 28 beaufschlagen das Gehäuse 22 über diese Unterlegeelemente 80. Da das Gehäuse 22 aus im Allgemeinen vergleichsweise leicht verformbarem Blechmaterial hergestellt werden soll, werden auf diese Art und Weise verschiedene Vorteile kombiniert. Einerseits besteht nicht die Gefahr, dass beim festen Anziehen der Schraubbolzen 28 deren Köpfe sich in das Material des Gehäuses 22 einprägen und somit undefinierte Befestigungszustände entstehen. Hierzu ist es insbesondere vorteilhaft, die Unterlegeelemente 80 aus einem Material herzustellen, das eine größere Materialhärte aufweist, als das Material des Gehäuses 22, also beispielsweise aus gehärtetem Stahlblech oder dergleichen.

Ein weiterer so eingeführter Vorteil ist, dass das Gehäuse 22 dort, wo die Schraubbolzen 28 eingebracht werden und mithin im Wandungsbereich 20 die Aussparungen 76 vorhanden sind, axial nicht gestützt wäre und beim Anziehen der Schraubbolzen 28 die Gefahr bestünde, dass das Gehäuse axial in die Aussparungen 76 hineingezogen wird und sich dabei undefiniert verformt. Durch die vermittels der Unterlegeelemente 80 eingeführte Verstärkung wird jedoch auch dieser Effekt vermieden. Um insbesondere in diesen Bereich die Stabilität des Gehäuses 22 noch zu erhöhen, kann dieses in Zuordnung zu einem oder mehreren der Schraubbolzen 28 im jeweiligen Umfangsbereich mit einer axialen Ausformung 82 versehen sein, so dass durch den hierzu erforderlichen Umformungsvorgang eine erhöhte Steifigkeit des Gehäuses 22 erzielt wird.

Durch das Bereitstellen von Unterlegeelementen 80 jeweils für mehrere Befestigungsbolzen 28 wird auf Grund der besseren Flächenbelastung eine gleichmäßigere Belastung des Gehäuses 22 erzielt. Dazu trägt insbesondere auch bei, dass die Unterlegeelemente 80 sich in Umfangsrichtung über die Köpfe der Schraubbolzen 28 hinaus erstrecken.

Die Unterlageelemente 80 können selbstverständlich in Radialrichtung nach innen über die Köpfe der Schraubbolzen 28 vorstehen, um die Flächenpressung noch weiter zu vermindern.

Es ist selbstverständlich, dass diese Unterlegeelemente 80 nicht notwendigerweise so gebildet sein müssen, dass sie in Zuordnung jeweils zu einer Gruppe von Schraubbolzen 28 vorgesehen sind. Es kann für jeden Schraubbolzen 28 auch ein separates Unterlegeelement vorgesehen sein. Auch die radiale Dimensionierung so, dass sie im Wesentlichen exakt derjenigen der Schraubköpfe entspricht, ist auf Grund der radialen Bauraum sparenden Ausgestaltung vorteilhaft. Bei einer alternativen Variante könnte auf die Unterlegeelemente 80 verzichtet werden und das Material des Gehäuses 22 dort, wo es durch die Schraubbolzen 28 direkt beaufschlagt wird, durch Induktivhärten oder in sonstiger Weise härter gemacht werden, als in den sonstigen Bereichen.

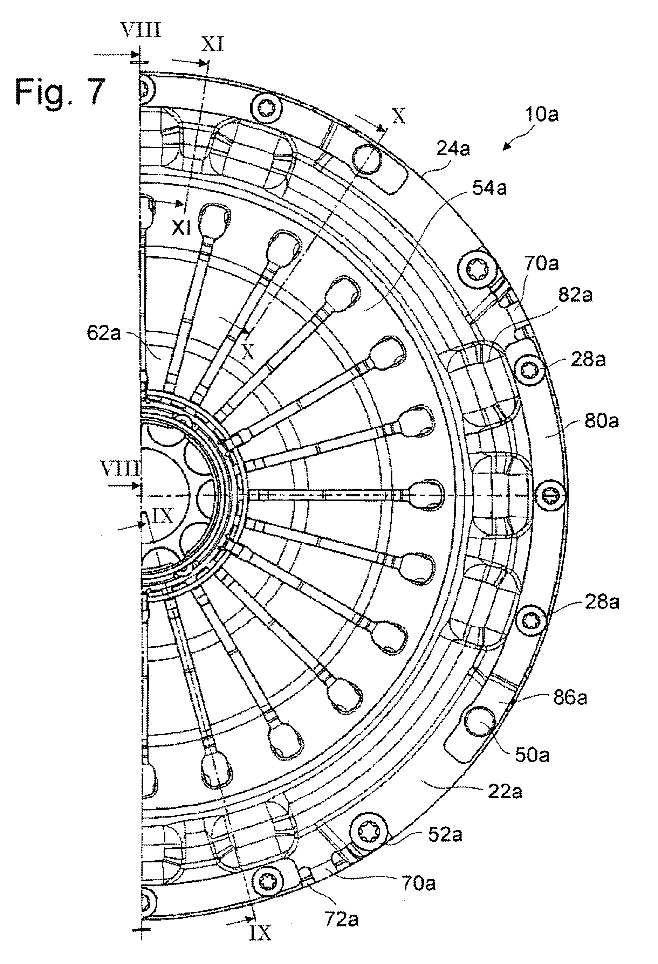

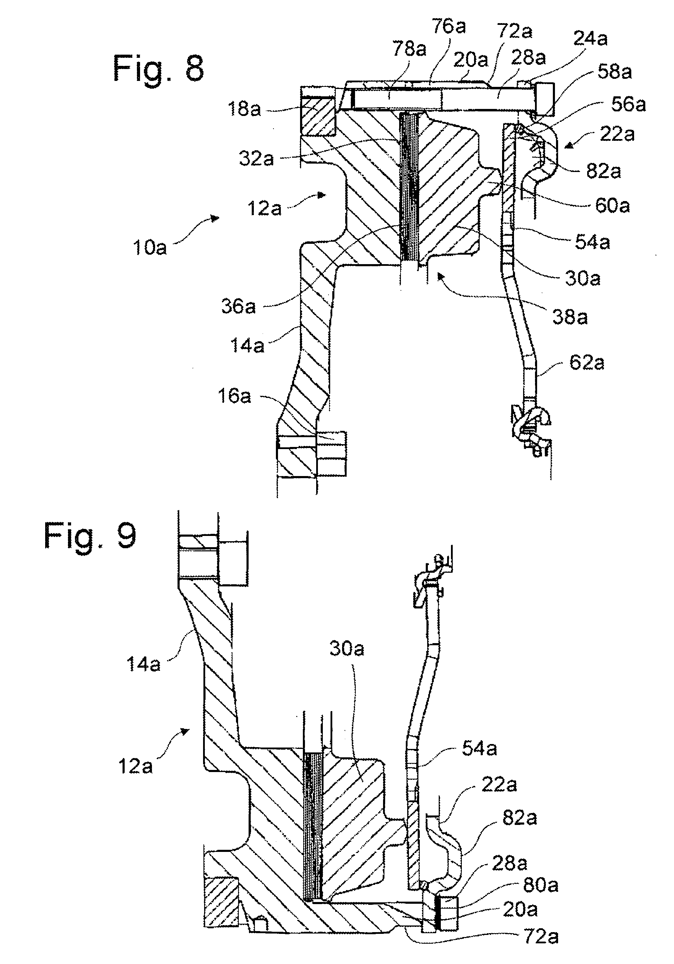

Die Fig. 7 bis 11 zeigen eine Ausgestaltungsform einer erfindungsgemäß aufgebauten Reibungskupplung. Komponenten, welche vorangehend beschriebenen Komponenten hinsichtlich Aufbau bzw. Funktion entsprechen, sind mit dem gleichen Bezugszeichen unter Hinzufügung des Anhangs "a" bezeichnet. In wesentlichen Bereichen besteht hier Übereinstimmung im Aufbau, insbesondere hinsichtlich der Ausgestaltung des Gehäuses und des Schwungrades, so dass auf die voranstehenden Ausführungen verwiesen werden kann.

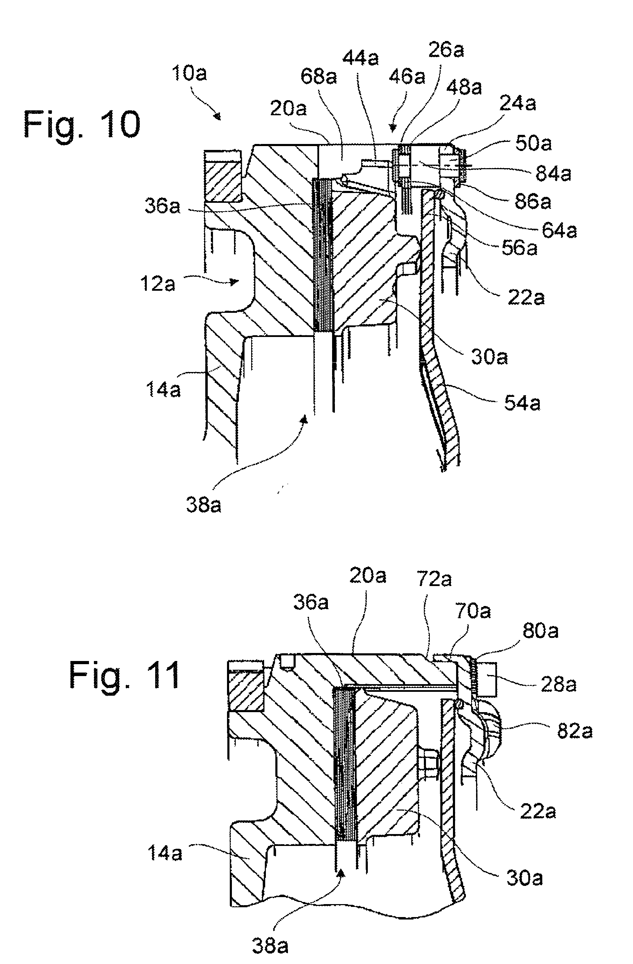

Bei dieser Ausgestaltungsform sind die Kopplungseinheiten 46a bzw. die hier in Dreierstapeln vorgesehenen Blattfedern 48a in ihren bezüglich des Gehäuses 22a festgelegten Endbereichen nicht in direktem, körperlichem Kontakt mit dem Gehäuse 22a. Es sind beispielsweise scheibenartige oder mit den Nietbolzen 50a integral ausgebildete Abstandselemente 84a vorgesehen, welche zwischen den radial äußeren Bereichen 24a des Gehäuses 22a und den Kopplungseinheiten 46a liegen und nunmehr die Anlageflächenbereiche 64a für diese bereitstellen. Diese Anlagebereiche 64a liegen somit ebenfalls nicht in axialer Überlappung mit dem radial äußeren Bereich 56a des Kraftspeichers 54a, sondern auf der der Stirnseite 26a des Wandungsbereichs 20a zugewandten Seite. Auch auf diese Art und Weise wird ein gegenseitiges Stören der Kopplungseinheiten 46a mit dem Kraftspeicher 54a bei gleichwohl sehr großer radialer Bauweise desselben vermieden. Die Abstandselemente 84a liegen, wie man in Fig. 10 erkennt, in geringem radialem Abstand zum radial äußeren Bereich 56a des Kraftspeichers 54a und stellen somit wieder eine Zentrierformation für diesen bereit.

Weiter erkennt man beispielsweise in Fig. 7, dass die Unterlegeelemente 80a in Umfangsrichtung sich jeweils bis in denjenigen Bereich erstrecken, in welchem auch jeweils eine Kopplungseinheit liegt und dort mit einem Verbindungsabschnitt 86a am Gehäuse 22a festgelegt sind. Diese Festlegung kann vorzugsweise mittels der Nietbolzen 50a erfolgen, mit welchen auch die Kopplungseinheiten 46a bezüglich des Gehäuses 22a festgelegt sind. Es sei hier darauf hingewiesen, dass dies selbstverständlich auch bei der vorangehend beschriebenen Ausgestaltungsform so sein kann, Die Festlegung der Unterlageelemente 80a bezüglich des Gehäuses 22a kann selbstverständlich auch in anderer Art und Weise beispielsweise durch Verklebung oder durch Einsatz separat hierfür vorgesehener Befestigungsbolzen oder dergleichen erfolgen.

## Patentansprüche

1. Reibungskupplung, insbesondere für den Antriebsstrang eines Fahrzeugs, umfassend:
- eine mit einem Antriebsorgan zur gemeinsamen Drehung um eine Drehachse (A) zu koppelnde Schwungmasse (12a) mit einem eine erste Reibfläche (34a) bereitstellenden Bodenbereich ( 14a) und einem radial außen vom Bodenbereich (14a) im Wesentlichen axial sich erstreckenden Wandurtgsbereich (20a),
- ein im Wesentlichen scheibenartiges Gehäuse (22a), welches in seinem radial äußeren Bereich (24a) bezüglich einer Stirnseite des Wandungsbereichs (20a) abgestützt ist und daran festgelegt ist,
- eine Anpressplatte (30a), welche eine zweite Reibfläche (32a) bereitstellt und vermittels einer Mehrzahl von Kopplungseinheiten ( 46a) mit dem scheibenartigen Gehäuse (22a) zur gemeinsamen Drehung um die Drehachse (A) und bezüglich des scheibenartigen Gehäuses (22a) axial bewegbar gekoppelt ist,
- eine im Wesentlichen in dem von der Schwungmasse (12a) und dem Gehäuse (22a) umgebenen Raum angeordnete Kraftbeaufschlagungsanordnung (54a), welche bezüglich des scheibenartigen Gehäuses (22a) und der Anpressplatte (30a) abgestützt ist zur Beaufschlagung der Anpressplatte (30a) in Richtung auf den Bodenbereich (14a) der Schwungmasse ( 12a) zu, wobei die Kopplungseinheiten (46a) bezüglich des scheibenartigen Gehäuses (22a) in einem axialen Bereich ( 56a) festgelegt sind, welcher sich axial im Wesentlichen nicht mit dem radial äußeren Bereich der Kraftbeaufschlagungsanordnung ( 54a) überlappt, und wobei an dem radial äußeren Bereich (24a) des scheibenartigen Gehäuses (22a) Anlageflächenbereiche (64a) für die Kopplungseinheiten (46a) ausgebildet sind, wobei die Anlageflächenbereiche (64a) bezüglich des radial äußeren Bereichs (56a) der Kraftbeaufschlagungsanordnung (54a) axial versetzt liegen
**dadurch gekennzeichnet,**
**dass** die Kopplungsbereiche (46a) bezüglich des scheibenartigen Gehäuses (22a) über Abstandselemente (84a) abgestützt sind, welche einerseits Anlageflächenbereiche (64a) für die Kopplungseinheiten (46a) bereitstellen und andererseits eine Zentrierformation für die Kraftbeaufschlagungsanordnung (54; 54a) bilden.

2. Reibungskupplung nach Anspruch 1,
**dadurch gekennzeichnet, dass** die Anlageflächenbereiche (64a) bezüglich des radial äußeren Bereichs (56a) der Kraftbeaufschlagungsanordnung (54a) an einer von der Stirnseite (26a) abgewandten Seite liegen.

3. Reibungskupplung nach Anspruch 2,
**dadurch gekennzeichnet, dass** die Anlageflächenbereiche (64a) einer der Stirnseite (26a) zugewandten Seite des scheibenartigen Gehäuses (22a) liegen.

4. Reibungskupplung nach Anspruch 2,
**dadurch gekennzeichnet, dass** die Anlageflächenbereiche (64a) an einer von der Stirnseite abgewandten Seite des scheibenartigen Gehäuses (22a) liegen.

5. Reibungskupplung nach Anspruch 1,
**dadurch gekennzeichnet, dass** die Anlageflächenbereiche (64a) bezüglich des radial äußeren Bereichs (56a) der Kraftbeaufschlagungsanordnung (54a) an einer der Stirnseite (26a) zugewandten Seite liegen.

6. Reibungskupplung nach einem der Ansprüche 1 bis 5,
**dadurch gekennzeichnet, dass** die Kopplungseinheiten (46a) wenigstens eine Blattfeder (48a) umfassen.

7. Reibungskupplung nach einem der Ansprüche 1 bis 6,
**dadurch gekennzeichnet, dass** die Kraftbeaufschlagungsanordnung ( 54a) eine Membranfeder umfasst.

8. Reibungskupplung nach einem der Ansprüche 1 bis 7,
**dadurch gekennzeichnet, dass** die Kraftbeaufschlagungsanordnung ( 54a) in ihrem radial äußeren Bereich (56a) bezüglich des scheibenartigen Gehäuses (22a) und radial weiter innen bezüglich der Anpressplatte (30a) abgestützt Ist.

9. Reibungskupplung nach einem der Ansprüche 1 bis 8,
**dadurch gekennzeichnet, dass** im Wandungsbereich (20a) Aussparungen (68a) für die Kopplungseinheiten (46a) ausgebildet sind.

10. Reibungskupplung nach einem der Ansprüche 1 bis 9,
**dadurch gekennzeichnet, dass** das scheibenartige Gehäuse (22a) durch eine Mehrzahl von in die Schwungmasse (12a) eingreifenden Befestigungsbolzen (28a) an dieser festgelegt ist.

11. Reibungskupplung nach einem der Ansprüche 1 bis 10,
**dadurch gekennzeichnet, dass** das scheibenartige Gehäuse (22a) eine Mehrzahl von den Wandungsbereich (20a) axial übergreifenden Zentrierabschnitten (70a) aufweist.

12. Reibungskupplung nach Anspruch 11,
**dadurch gekennzeichnet, dass** der Wandungsbereich (20a) im Bereich seines axialen Endes einen radialen Rücksprung (72a) zur Aufnahme der Zentrierabschnitte (70a) aufweist

13. Reibungskupplung nach Anspruch 10 oder Anspruch 11 oder 12, sofern auf Anspruch 10 rückbezogen,
**dadurch gekennzeichnet, dass** der Wandungsbereich (22a) dort, wo Befestigungsboizen (28a) vorgesehen sind, axial offene Aussparungen (76a) aufweist.

14. Reibungskupplung nach Anspruch 12 und Anspruch 13,
**dadurch gekennzeichnet, dass** die Aussparungen (76a) den axialen Bereich des radialen Rücksprungs (72a) überdecken.

15. Reibungskupplung nach Anspruch 10 oder einem der Ansprüche 11 bis 14, sofern auf Anspruch 10 rückbezogen,
**dadurch gekennzeichnet, dass** an der von der Stirnseite (26a) abgewandten Seite des scheibenartigen Gehäuses (22a) dort, wo Befestigungsbolzen (28a) vorgesehen sind, eine größere Materialhärte für die Beaufschlagung durch die Befestigungsbolzen (28a) bereitgestellt ist, als in anderen Bereichen des scheibenartigen Gehäuses (22a).

16. Reibungskupplung nach Anspruch 15,
**dadurch gekennzeichnet, dass** das scheibenartige Gehäuse (22a) dort. wo die Befestigungsbolzen (28a) dieses beaufschlagen, mit größerer Materialhärte ausgebildet Ist, als In anderen Bereichen.

17. Reibungskupplung nach Anspruch 15,
**dadurch gekennzeichnet, dass** in Zuordnung zu den Befestigungsbolzen (28; 28a) Unterlegeelemente (80a) vorgesehen sind, die bezüglich des Materials des Gehäuses (22a) eine größere Materialhärte aufweisen.

18. Reibungskupplung nach Anspruch 17,
**dadurch gekennzeichnet, dass** die Unterlegeelemente (80a) an dem Gehäuse (20a) durch Befestigungselemente (50a) festgelegt sind, vermittels welchen die Kopplungseinheiten (46a) bezüglich des Gehäuses (22a) festgelegt sind.

## Claims

1. Friction clutch, in particular for the drivetrain of 2a vehicle, comprising:
- a centrifugal mass (12a) for coupling to a drive element for common rotation about an axis of rotation (A), said centrifugal mass having a base region (14a), which provides a first friction surface (34a), and having a substantially axially extending wall region (20a) situated radially to the outside of the base region (14a),
- a substantially disc-shaped housing (22a) which, in its radially outer region (24a), is supported with respect to and fixed to a face side of the wall region (20a),
- a pressure plate (30a) which provides a second friction surface (32a) and which, by means of a multiplicity of coupling units (46a), is coupled to the disc-shaped housing (22a) for common rotation about the axis of rotation (A) and so as to be axially movable with respect to the disc-shaped housing (22a),
- a force-exerting arrangement (54a) which is arranged substantially in the space surrounded by the centrifugal mass (12a) and the housing (22a) and which is supported with respect to the disc-shaped housing (22a) and the pressure plate (30a) in order to load the pressure plate (30a) in the direction of the base region (14a) of the centrifugal mass (12a), wherein the coupling units (46a) are fixed with respect to the disc-shaped housing (22a) in an axial region (56a) which substantially does not axially overlap the radially outer region of the force-exerting arrangement (54a), and wherein on the radially outer region (24a) of the disc-shaped housing (22a) there are formed contact surface regions (64a) for the coupling units (46a), wherein the contact surface regions (64a) are situated axially offset with respect to the radially outer region (56a) of the force-exerting arrangement (54a),
**characterized**
**in that** the coupling regions (46a) are supported with respect to the disc-shaped housing (22a) via spacer elements (84a) which firstly provide contact surface regions (64a) for the coupling units (46a) and which secondly form a centring formation for the force-exerting arrangement (54; 54a).

2. Friction clutch according to Claim 1,
**characterized in that** the contact surface regions (64a) are situated, with respect to the radially outer region (56a) of the force-exerting arrangement (54a), on a side facing away from the face side (26a).

3. Friction clutch according to Claim 2,
**characterized in that** the contact surface regions (64a) are situated on a side, which faces towards the face side (26a), of the disc-shaped housing (22a).

4. Friction clutch according to Claim 2,
**characterized in that** the contact surface regions (64a) are situated on a side, which faces away from the face side, of the disc-shaped housing (22a).

5. Friction clutch according to Claim 1,
**characterized in that** the contact surface regions (64a) are situated, with respect to the radially outer region (56a) of the force-exerting arrangement (54a), on a side facing towards the face side (26a).

6. Friction clutch according to one of Claims 1 to 5,
**characterized in that** the coupling units (46a) comprise at least one leaf spring (48a).

7. Friction clutch according to one of Claims 1 to 6,
**characterized in that** the force-exerting arrangement (54a) comprises a diaphragm spring.

8. Friction clutch according to one of Claims 1 to 7,
**characterized in that** the force-exerting arrangement (54a) is supported, in its radially outer region (56a), with respect to the disc-shaped housing (22a) and, radially further inwards, with respect to the pressure plate (30a).

9. Friction clutch according to one of Claims 1 to 8,
**characterized in that** cutouts (68a) for the coupling units (46a) are formed in the wall region (20a).

10. Friction clutch according to one of Claims 1 to 9,
**characterized in that** the disc-shaped housing (22a) is fixed to the centrifugal mass (12a) by means of a multiplicity of fastening bolts (28a) which engage into said centrifugal mass.

11. Friction clutch according to one of Claims 1 to 10,
**characterized in that** the disc-shaped housing (22a) has a multiplicity of centring portions (70a) which engage axially over the wall region (20a).

12. Friction clutch according to Claim 11,
**characterized in that** the wall region (20a) has, in the region of its axial end, a radially recessed portion (72a) for receiving the centring portions (70a).

13. Friction clutch according to Claim 10 or Claim 11 or 12 where referred back to Claim 10,
**characterized in that** the wall region (22a) has axially open cutouts (76a) where fastening bolts (28a) are provided.

14. Friction clutch according to Claim 12 and Claim 13,
**characterized in that** the cutouts (76a) cover the axial region of the radially recessed portion (72a).

15. Friction clutch according to Claim 10 or one of Claims 11 to 14 where referred back to Claim 10,
**characterized in that**, on the side of the disc-shaped housing (22a) facing away from the face side (26a), where fastening bolts (28a) are provided, a greater material hardness is provided for the loading by the fastening bolts (28a) than is provided in other regions of the disc-shaped housing (22a).

16. Friction clutch according to Claim 15,
**characterized in that** the disc-shaped housing (22a) is formed with a greater material hardness where the fastening bolts (28a) act on it than in other regions.

17. Friction clutch according to Claim 15, **characterized in that** shim elements (80a) are provided so as to be assigned to the fastening bolts (28, 28a), which shim elements have a greater material hardness than the material of the housing (22a).

18. Friction clutch according to Claim 17, **characterized in that** the shim elements (80a) are fixed to the housing (20a) by fastening elements (50a), by means of which the coupling units (46a) are fixed with respect to the housing (22a).

## Revendications

1. Embrayage à friction, en particulier pour la chaîne cinématique d'un véhicule, comprenant :
- une masse d'inertie (12a) devant être accouplée à un organe d'entraînement en vue d'une rotation commune autour d'un axe de rotation (A), comprenant une région de base (14a) fournissant une première surface de friction (34a) et une région de paroi (20a) s'étendant essentiellement axialement, radialement à l'extérieur de la région de base (14a),
- un boîtier (22a) essentiellement en forme de disque, qui est supporté dans sa région radialement extérieure (24a) par rapport à un côté frontal de la région de paroi (20a) et qui est fixé à celui-ci,
- une plaque de pression (30a) qui fournit une deuxième surface de friction (32a) et qui, par l'intermédiaire d'une pluralité d'unités d'accouplement (46a), est accouplée de manière déplaçable axialement au boîtier (22a) en forme de disque en vue d'une rotation commune autour de l'axe de rotation (A) et par rapport au boîtier (22a) en forme de disque,
- un agencement de sollicitation par force (54a) disposé essentiellement dans l'espace entouré par la masse d'inertie (12a) et le boîtier (22a), qui est supporté par rapport au boîtier (22a) en forme de disque et à la plaque de pression (30a) pour solliciter la plaque de pression (30a) dans la direction de la région de base (14a) de la masse d'inertie (12a), les unités d'accouplement (46a) étant fixées par rapport au boîtier (22a) en forme de disque dans une région axiale (56a) qui ne chevauche sensiblement pas axialement la région radialement extérieure de l'agencement de sollicitation par force (54a), et des régions de surface d'appui (64a) étant réalisées pour les unités d'accouplement (46a) au niveau de la région radialement extérieure (24a) du boîtier (22a) en forme de disque, les régions de surface d'appui (64a) étant situées de manière décalée axialement par rapport à la région radialement extérieure (56a) de l'agencement de sollicitation par force (54a),
**caractérisé en ce que**
les régions d'accouplement (46a) sont supportées par rapport au boîtier (22a) en forme de disque par le biais d'éléments d'espacement (84a), qui fournissent d'une part des régions de surface d'appui (64a) pour les unités d'accouplement (46a) et qui forment d'autre part une formation de centrage pour l'agencement de sollicitation par force (54 ; 54a).

2. Embrayage à friction selon la revendication 1,
**caractérisé en ce que** les régions de surface d'appui (64a) sont situées par rapport à la région radialement extérieure (56a) de l'agencement de sollicitation par force (54a) sur un côté opposé au côté frontal (26a).

3. Embrayage à friction selon la revendication 2,
**caractérisé en ce que** les régions de surface d'appui (64a) sont situées sur un côté du boîtier (22a) en forme de disque tourné vers le côté frontal (26a).

4. Embrayage à friction selon la revendication 2,
**caractérisé en ce que** les régions de surface d'appui (64a) sont situées d'un côté du boîtier (22a) en forme de disque opposé au côté frontal.

5. Embrayage à friction selon la revendication 1,
**caractérisé en ce que** les régions de surface d'appui (64a) sont situées, par rapport à la région radialement extérieure (56a) de l'agencement de sollicitation par force (54a), sur un côté tourné vers le côté frontal (26a).

6. Embrayage à friction selon l'une quelconque des revendications 1 à 5,
**caractérisé en ce que** les unités d'accouplement (46a) comprennent au moins un ressort à lame (48a).

7. Embrayage à friction selon l'une quelconque des revendications 1 à 6,
**caractérisé en ce que** l'agencement de sollicitation par force (54a) comprend un ressort à membrane.

8. Embrayage à friction selon l'une quelconque des revendications 1 à 7,
**caractérisé en ce que** l'agencement de sollicitation par force (54a) est supporté dans sa région radialement extérieure (56a) par rapport au boîtier (22a) en forme de disque et radialement plus vers l'intérieur par rapport à la plaque de pression (30a).

9. Embrayage à friction selon l'une quelconque des revendications 1 à 8,
**caractérisé en ce que** dans la région de paroi (20a) sont réalisés des évidements (68a) pour les unités d'accouplement (46a).

10. Embrayage à friction selon l'une quelconque des revendications 1 à 9,
**caractérisé en ce que** le boîtier (22a) en forme de disque est fixé à la masse d'inertie par une pluralité de boulons de fixation (28a) venant en prise dans la masse d'inertie (12a).

11. Embrayage à friction selon l'une quelconque des revendications 1 à 10,
**caractérisé en ce que** le boîtier (22a) en forme de disque présente une pluralité de portions de centrage (70a) venant en prise axialement pardessus la région de paroi (20a).

12. Embrayage à friction selon la revendication 11,
**caractérisé en ce que** la région de paroi (20a) présente, dans la région de son extrémité axiale, un retrait radial (72a) pour recevoir les portions de centrage (70a).

13. Embrayage à friction selon la revendication 10 ou la revendication 11 ou 12, dans la mesure où elles se rapportent à la revendication 10,
**caractérisé en ce que** la région de paroi (22a) présente des évidements ouverts axialement (76a) là où sont prévus des boulons de fixation (28a).

14. Embrayage à friction selon la revendication 12 et la revendication 13,
**caractérisé en ce que** les évidements (76a) recouvrent la région axiale du retrait radial (72a).

15. Embrayage à friction selon la revendication 10 ou selon l'une quelconque des revendications 11 à 14, dans la mesure où elles se rapportent à la revendication 10,
**caractérisé en ce que** du côté du boîtier (22a) en forme de disque opposé au côté frontal (26a), là où sont prévus des boulons de fixation (28a), une plus grande dureté de matériau est prévue pour la sollicitation par les boulons de fixation (28a) par rapport aux autres régions du boîtier (22a) en forme de disque.

16. Embrayage à friction selon la revendication 15,
**caractérisé en ce que** le boîtier (22a) en forme de disque est réalisé là où les boulons de fixation (28a) le sollicitent, avec une plus grande dureté de matériau que dans les autres régions.

17. Embrayage à friction selon la revendication 15,
**caractérisé en ce qu'**en association avec les boulons de fixation (28 ; 28a), des éléments de rondelle (80a) sont prévus, lesquels présentent une plus grande dureté de matériau par exemple au matériau du boîtier (22a).

18. Embrayage à friction selon la revendication 17,
**caractérisé en ce que** les éléments de rondelle (80a) sont fixés sur le boîtier (20a) par des éléments de fixation (50a), au moyen desquels les unités d'accouplement (46a) sont fixées par rapport au boîtier (22a).
